# EUROPEAN PATENT SPECIFICATION

(11) **EP 1 781 488 B1**
(45) Date of publication and mention of the grant of the patent: **26.08.2009**
(21) Application number: 05742400.4
(22) Date of filing: 23.05.2005
(51) Int. Cl.: B60N 2/28

(54) **CHILD SAFETY SEAT**
KINDERSICHERHEITSSITZ
SIEGE-AUTO

(30) Priority: 19.06.2004 GB 0413938
(43) Date of publication of application: 09.05.2007
(73) Proprietor: Britax Excelsior Limited, Hampshire SP10 3UW (GB)
(72) Inventor: BATCHELOR, Adrian, Newbury,Berkshire RG20 9XW (GB)
(74) Representative: Bosch, Matthias
(86) International application number: PCT/GB2005/001803
(87) International publication number: WO 2005/123446

(56) References cited:
- EP-A- 1 157 882
- DE-A1- 4 121 795
- DE-C1- 19 646 621
- US-A- 4 854 639
- US-A- 5 775 772
- US-A- 5 915 787

## Description

The present invention relates to a child safety seat.

Certain child safety seats are both secured to an adult seat in a car with the adult seat belt and utilise this belt for restraining the child in the seat in an accident. Other child safety seats use points fixed in the car for fixing the seats and have their own child restraint belts. The present invention is of the former type.

An example of this type of seat is described in US Patent Specification No 4,854,639. The seat has a seat body having a seat portion with lower side walls forming arm rests, and a back rest with upper side walls. Notches, formed between the upper and lower side walls respectively form guides for the lap portion of an adult, diagonal/lap seat belt which is secured by a buckle. The diagonal part of the belt passes through a belt guide at the top of the back.

Another example of this type of seat is described in European Patent Application No. 1,356,986. The squab or base of the seat has "arms", which would be arm rests in an adult car seat, but are intended as hip protection against side impact in this child seat. Accordingly, we call them "homs". The hom structure is incorporated into the base. The back of the seat is pivoted to the base and incorporates wings for further side impact protection. The wings to a large extent extend over the horns, although a small gap develops as the back is inclined with respect to the base. Notches equivalent to those in the US patent are provided beneath the horns. An upper belt guide is provided for the diagonal part of a diagonal-lap belt with which the seat is usually secured.

The document EP 1157882 discloses a child safety seat having all the features of the preamble of independent claim 1.

The object of the present invention is to provide an improved child safety seat of this type.

According to the invention there is provided child safety seat, which comprises:
- a base having a base inner shell with an occupant support surface;
- a back having a back inner shell, defining a back rest and side protection wings extending forwards of the back rest;
- a pivotal connection between the base inner shell and the back inner shell; and
- belt guides on opposite sides of and at least partially above the support surface, at each side, the respective belt guide being formed of:
   - an outer formation extending from one of the two said inner shells and
   - an inner formation extending from the other of the two said inner shells, the inner formation extending close within the outer formation to an extent varying with inclination of the back and the formation on the back inner shell extending from the respective inner wing,
the arrangement being such that a belt crossing the support surface is positioned by the belt guides and is restrained from rising up the seat by the side wings.

It can be envisaged that the inner and outer formations are flanges, possibly of single skin thickness and possibly hollow with double skin thickness, arranged to be adjacent laterally of the width of the seat, overlapping in the manner of a variable capacitor, with the inner one innermost widthwise and the outer one outermost width wise. However, in the preferred embodiment, the outer formation is of invert U cross-section, with the inner one accommodated within the outer one. The formations fit closely, whereby the belt passes smoothly from one to the other.

Whilst the formation integral with the base inner shell may extend down to the level of the support surface, normally, its downwards extent is short of the support surface, a short side surface being provided on down to the support surface. Preferably, the base inner shell is provided with side surfaces extending above the support surface in front and generally continuing the line of behind its said formations.

The seat can have an adjustable member in the back rest to allow the seat to abut the back rest of an adult vehicle seat, even if the two back rests are not set at the same inclination.

Further the seat will normally have a vertical adjustable head rest, adapting the seat for use with a growing child. The head rest will normally incorporate an upper seat belt guide at each side, for the upper run of the diagonal-lap belt according to the side of the car to which the seat is fitted.

Normally the seat will be upholstered, including with a seat squab pad on the support surface.

To help understanding of the invention, a specific embodiment thereof will now be described by way of example and with reference to the accompanying drawings, in which:
Figure 1 is a perspective view of a seat according to the invention;
Figure 2 is a partially side view of a base of the seat and part of its back in its most upright position;
Figure 3 is a similar view, with the back inclined; and

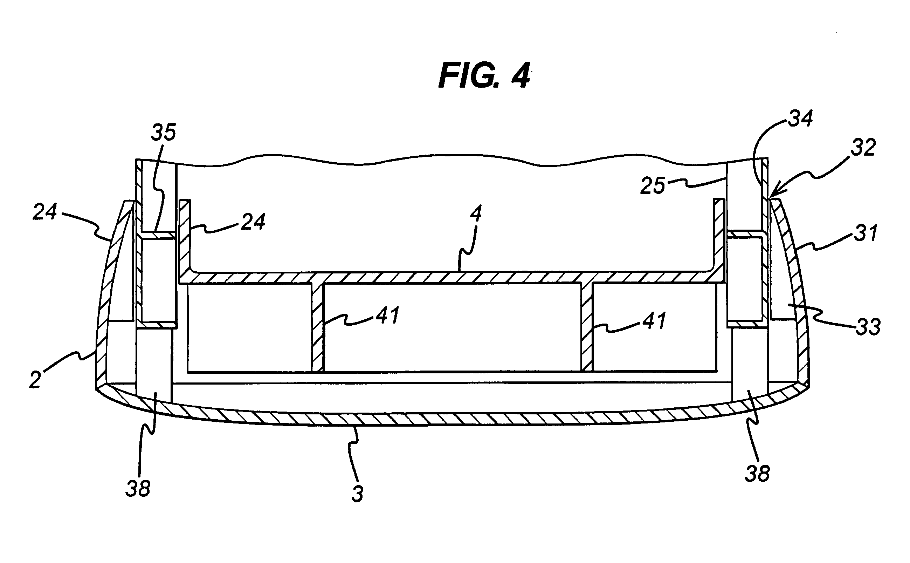

Figure 4 is a scrap cross-sectional view on the line IV-IV in Figure 3.

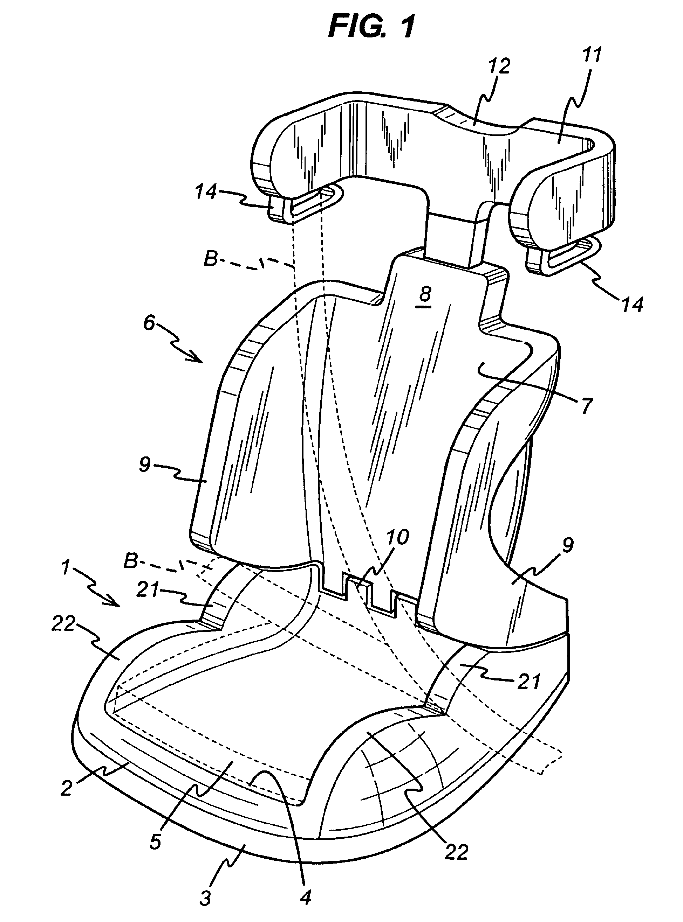

Referring to the drawings, the seat there shown has a base 1 including a polypropylene material, moulded, base inner shell 2, with a moulded bottom closure 3. The inner shell provides an occupant support surface 4 and an upholstered squab 5, shown dotted and only in Figure 1. The seat also has a back 6 with a similarly moulded, back inner shell 7 also upholstered (not shown) and having an integral back rest 8 and side wings 9. The base and the back are pivoted together at via a moulded hinge 10. The back has a height adjustable headrest 11, released for adjustment by a push surface 12. The headrest is provided with opposite upper seat belt guides 14. The seat is conventional in respect of these features, which will not be described in further detail.

In accordance with the invention, the seat has two lower seat belt guides 21 1 the junction between the back side wings 9 and sides 22 of the base shell, which latter sides extend up above the level of the occupant support surface 4. The guides are depressions with respect to the side wings 9 and the sides 22 and have generally curved surfaces 23 centred on the pivot axis 15 of the hinge 10.

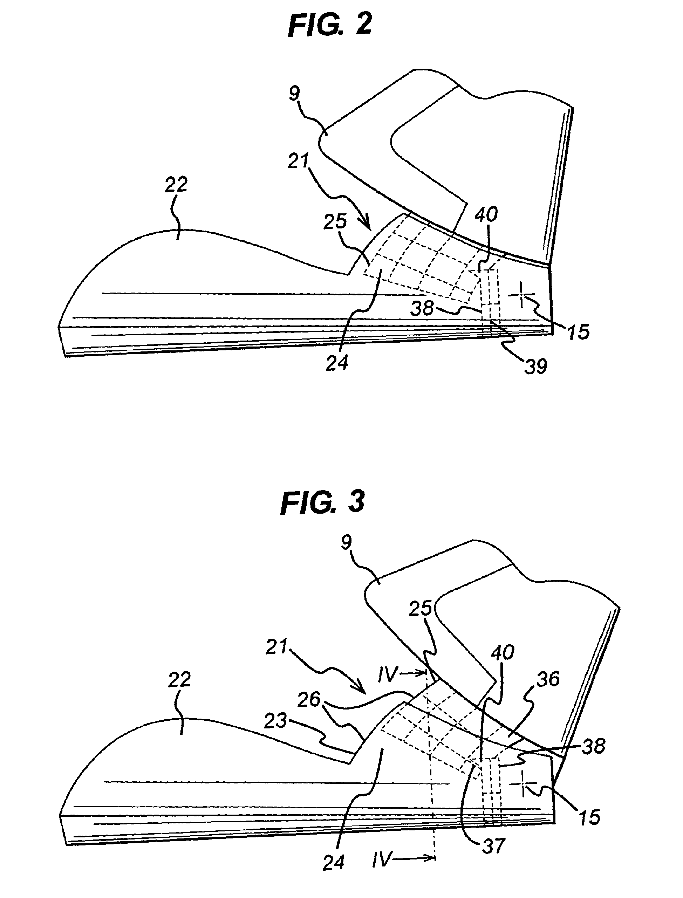

In the configuration shown in Figure 2, in which the back is pivoted as far forwards as possible, the guides 21 are defined entirely by invert U-section, outer formations 24, moulded integrally with the base shell 2 and continuing the line of the sides 22. The formations extend to abut the side wings 9, at the bottom edge of the latter. The wings extend obliquely over the formations 24. Further inner formations 25 moulded integrally with the side wings 9, and visible in Figure 3 with the seat reclined, are accommodated inside the outer formations 24. The inner formations 25 close the gap between the outer formations 24 and the wings 9, when the seat is reclined, so that the adult seat belt B - show dashed in Figure 1 - cannot pull between the two shell mouldings. Rather since the inner formations 25 are close within the outer formations 24 a substantially continuous guide surface 26 is formed.

The invert U formations 24 are plain, i.e. of un-reinforced webs 31, except that the webs diverge downwards from their apertures 32 for the inner formations 25. To enable forces to be reacted, the webs are provided with vertically extending ribs 33 for abutment with the inner formations. The inner formations 25 are comprised of plain outer webs 34 and reinforcing flanges 35, which face inwards. Channels 36, curved to the general shape of the inner formations, are provided down their radially-inner, rear edges, with a cross piece 37 at the bottom. The bottom closure 3 has upstanding 38 formations, having reinforcing ribs 39 and noses 40. These are positioned to extend up behind the inner formations 25 with the noses engaging in the channels 36 and limiting the angle of recline of the back by engagement with the crosspieces 37.

The width of the inner formations 25 is such as to allow clearance with the outer formations 24, but no more, for the back to pivot freely. The result is that although the lateral play is limited by the hinge 10, it would not be allowed by lateral engagement of the formations 24,25. This engagement reinforces the side wings 9, in that in the event of a side impact tending to deform one of the side wings, its deformation is restricted by its formation 25 reacting against the inner one of the webs 31 and its ribs 33. The reaction is transferred, via the support surface of the lower inner shell, which has reinforcing webs 41, to the adult seat belt engaging the opposite side, lower belt guide 21. This itself is reinforced by the presence of its inner formation inside its outer formation.

## Claims

1. A child safety seat which comprises:
• a base (1) having a base inner shell (2) with an occupant support surface (4);
• a back (6) having a back inner shell (7), defining a back rest and side protection wings (9) extending forwards of the back rest;
• a pivotal connection (10) between the base inner shell and the back inner shell; and
• belt guides (21) on opposite sides of and at least partially above the support surface, at each side, the respective belt guide is **characterised by** being formed of:
• an outer formation (24) extending from one of the two said inner shells and
• an inner formation (25) extending from the other of the two said inner shells, the inner formation extending close within the outer formation to an extent varying with inclination of the back and the formation on the back inner shell extending from the respective inner wing,
the arrangement being such that a belt crossing the support surface is positioned by the belt guides and is restrained from rising up the seat by the side wings.

2. A child safety seat as claimed in claim 1, wherein the inner and outer formations are flanges, arranged to be adjacent laterally of the width of the seat, overlapping in the manner of a variable capacitor, with the inner one innermost widthwise and the outer one outermost widthwise.

3. A child safety seat as claimed in claim 2, wherein the flanges are of single skin thickness.

4. A child safety seat as claimed in claim 2, wherein the flanges are hollow with double skin thickness.

5. A child safety seat as claimed in claim 1, wherein the outer formation is of invert U cross-section, with the inner formation accommodated within the outer formation.

6. A child safety seat as claimed in any one of the preceding claims, wherein the base inner shell is provided with side surfaces extending above the support surface.

7. A child safety seat as claimed in claim 6, wherein there is a formation integral with the base inner shell which formation extends downwards only to the side surfaces.

8. A child safety seat as claimed in any one of the preceding claims, the seat having an adjustable member in the back rest to allow the seat to abut the back rest of an adult vehicle seat.

9. A child safety seat as claimed in any one of the preceding claims, the seat having a vertical adjustable head rest.

10. A child safety seat as claimed in claim 9, wherein the head rest incorporates an upper seat belt guide at each side, for the upper run of a diagonal-lap belt according to the side of a car to which the seat is fitted.

11. A child safety seat as claimed in any one of the preceding claims, wherein the inner shells are formed from moulded polypropylene.

12. A child safety seat as claimed in any one of the preceding claims, wherein the inner shells are upholstered.

## Patentansprüche

1. Kindersicherheitssitz mit:
• einer Basis (1), die eine innere Basisschale (2) mit einer Insassen unterstützenden Oberfläche (4) aufweist;
• einem Rücken (6), der eine innere Rückenschale (7) aufweist, die eine Rückenlehne und Seitenschutz-Wangen (9) bildet, die sich aus der Rückenlehne nach vorne erstrecken;
• einer drehbar ausgebildeten Verbindung (10) zwischen der inneren Basisschale und der inneren Rückenschale; und
• Gurtführungen (21) auf entgegengesetzten Seiten der und zumindest teilweise oberhalb der unterstützenden Oberfläche, wobei auf jeder Seite die jeweilige Gurtführung **dadurch gekennzeichnet ist, dass** sie gebildet wird durch:
o eine äußere Ausformung (24), die sich aus einer der beiden inneren Schalen erstreckt und
o eine innere Ausformung (25), die sich aus der anderen der beiden inneren Schalen erstreckt, wobei sich die innere Ausbildung dicht entlang der äußeren Ausbildung erstreckt in einer Weite, die von der Neigung des Rückens abhängt und sich die Ausbildung an der inneren Rückenschale von der jeweiligen inneren Wange erstreckt,
wobei die Anordnung so ist, dass ein die unterstützende Oberfläche überquerender Gurt durch die Gurtführungen positioniert wird und durch die seitlichen Wangen davor bewahrt wird, entlang des Sitzes nach oben zu gelangen.

2. Kindersicherheitssitz gemäß Anspruch 1, wobei die inneren und äußeren Ausformungen als Wangen ausgebildet sind, die so angeordnet sind, dass sie in Bezug auf die Breite des Sitzes seitlich aneinander anliegen, und nach Art einer variablen Koppelung überlappen, wobei die innere der Breite nach am innersten und die äußerste der Breite nach am äußersten liegt.

3. Kindersicherheitssitz wie in Anspruch 2, wobei die Wangenabschnitte eine einfache Schichtdicke aufweisen.

4. Kindersicherheitssitz gemäß Anspruch 2, wobei die Wangenabschnitte hohl sind und eine doppelte Schichtdicke aufweisen.

5. Kindersicherheitssitz gemäß Anspruch 1, wobei der Querschnitt der äußeren Ausformung einem umgekehrten U entspricht und die innere Ausformung innerhalb der äußeren Ausformung aufgenommen wird.

6. Kindersicherheitssitz nach einem der vorhergehenden Ansprüche, wobei die innere Basisschale mit Seitenflächen ausgestattet ist, die sich oberhalb der unterstützenden Oberfläche erstrecken.

7. Kindersicherheitssitz gemäß Anspruch 6, wobei die innere Basisschale als integralen Bestandteil eine Ausformung aufweist, die sich nur zu den Seitenflächen hin nach unten erstreckt.

8. Kindersicherheitssitz nach einem der vorhergehenden Ansprüche, wobei der Sitz ein verstellbares Element in der Rückenlehne aufweist, mit dem es möglich ist, den Sitz an die Rückenlehne eines Fahrzeugsitzes für Erwachsene anzulehnen.

9. Kindersicherheitssitz nach einem der vorhergehenden Ansprüche, wobei der Sitz eine vertikal verstellbare Kopfstütze aufweist.

10. Kindersicherheitssitz gemäß Anspruch 9, wobei die Kopfstütze auf jeder Seite eine obere Gurtführung aufweist für den oberen Teil eines Dreipunktgurts entsprechend der Fahrzeugseite, auf der der Sitz angebracht ist.

11. Kindersicherheitssitz nach einem der vorhergehenden Ansprüche, wobei die inneren Schalen aus geformtem Polypropylen gebildet sind.

12. Kindersicherheitssitz nach einem der vorhergehenden Ansprüche, wobei die inneren Schalen gepolstert sind.

## Revendications

1. Siège de sécurité pour enfant qui comprend :
• une base (1) ayant une coque intérieure de base (2) avec une surface de support d'occupant (4) ;
• un dos (6) ayant une coque intérieure de dos (7), définissant un dossier et des ailes de protection latérales (9) s'étendant vers l'avant du dossier ;
• une connexion pivotante (10) entre la coque intérieure de base et la coque intérieure de dos ; et
• des guides de ceinture (21) sur des côtés opposés de et au moins partiellement au-dessus de la surface de support, sur chaque côté, le guide de ceinture respectif est **caractérisé par** ce qu'étant formé :
• d'une formation extérieure (24) s'étendant de l'une des deux dites coques intérieures et
• d'une formation intérieure (25) s'étendant de l'autre des deux dites coques intérieures, la formation intérieure s'étendant de manière proche à l'intérieur de la formation extérieure dans une mesure variant avec l'inclinaison du dos et la formation sur la coque intérieure de dos s'étendant de l'aile intérieure respective,
l'agencement étant tel qu'une ceinture croisant la surface de support est positionnée par les guides de ceinture et est empêchée de remonter sur le siège par les ailes latérales.

2. Siège de sécurité pour enfant selon la revendication 1, dans lequel les formations intérieure et extérieure sont des rebords, agencés de façon à être adjacents latéralement à la largeur du siège, se chevauchant à la manière d'un condensateur variable, avec l'intérieure le plus à l'intérieur dans le sens de la largeur et l'extérieure le plus à l'extérieur dans le sens de la largeur.

3. Siège de sécurité pour enfant selon la revendication 2, dans lequel les rebords sont d'une épaisseur de peau simple.

4. Siège de sécurité pour enfant selon la revendication 2, dans lequel les rebords sont creux avec une épaisseur de peau double.

5. Siège de sécurité pour enfant selon la revendication 1, dans lequel la formation extérieure est d'une section transversale en U inversé, avec la formation intérieure reçue à l'intérieur de la formation extérieure.

6. Siège de sécurité pour enfant selon l'une quelconque des revendications précédentes, dans lequel la coque intérieure de base est prévue avec des surfaces latérales s'étendant au-dessus de la surface de support.

7. Siège de sécurité pour enfant selon la revendication 6, dans lequel il y a une formation intégrale avec la coque intérieure de base, laquelle formation s'étend vers le bas uniquement jusqu'aux surfaces latérales.

8. Siège de sécurité pour enfant selon l'une quelconque des revendications précédentes, le siège ayant un élément ajustable dans le dossier pour permettre que le siège vienne buter contre le dossier d'un siège de véhicule pour adulte.

9. Siège de sécurité pour enfant selon l'une quelconque des revendications précédentes, le siège ayant un appuie-tête ajustable vertical.

10. Siège de sécurité pour enfant selon la revendication 9, dans lequel l'appuie-tête incorpore un guide de ceinture de siège supérieur sur chaque côté, pour la course supérieure d'une ceinture sous-abdominale diagonale en fonction du côté d'une voiture sur lequel le siège est installé.

11. Siège de sécurité pour enfant selon l'une quelconque des revendications précédentes, dans lequel les coques intérieures sont formées à partir de polypropylène moulé.

12. Siège de sécurité pour enfant selon l'une quelconque des revendications précédentes, dans lequel les coques intérieures sont capitonnées.
